# EUROPEAN PATENT SPECIFICATION

(11) **EP 2 734 023 B1**
(45) Date of publication and mention of the grant of the patent: **26.06.2019**
(21) Application number: 12811792.6
(22) Date of filing: 26.04.2012
(51) Int. Cl.: H05K 13/04, B23P 19/02, G05B 19/19, G01L 5/00

(54) **MANUFACTURING MACHINE**
HERSTELLUNGSMASCHINE
MACHINE DE FABRICATION

(30) Priority: 11.07.2011 JP 2011152673
(43) Date of publication of application: 21.05.2014
(73) Proprietor: FUJI Corporation, Chiryu Aichi (JP)
(72) Inventor: NAGIRI, Keisuke, Chiryu Aichi (JP); FUJITA, Masatoshi, Chiryu Aichi (JP); NAGATA, Ryo, Chiryu Aichi (JP)
(74) Representative: Grünecker Patent- und Rechtsanwälte PartG mbB
(86) International application number: PCT/JP2012/061261
(87) International publication number: WO 2013/008518

(56) References cited:
- EP-A2- 1 685 914
- EP-A2- 1 743 718
- DE-A1- 19 954 310
- DE-A1-102005 012 876
- JP-A- 5 055 797
- JP-A- 11 145 683
- JP-A- 2004 095 718
- JP-A- 2010 087 178

## Description

### Technical Field

The present invention relates to a production machine including a function of moving a mobile body by an actuator until the mobile body collides with a pressure target and controlling a pressure force of the mobile body with respect to the pressure target.

### Background Art

For example, in a component mount machine, when a component is absorbed to an absorption nozzle and mounted on a circuit board, the component is mounted by being slightly pressured by the absorption nozzle onto the circuit board. In this case, to enhance productivity, it is required to increase the driving speed of the absorption nozzle (mount head). However, as the speed increases, an impact force when the component absorbed to the absorption nozzle collides with the circuit board increases to possibly damage the component. Therefore, the impact force is required to be mitigated.

Also in a component assembling machine which press-fits (inserts) a press-fit (insertion) component into a hole, if the driving speed of an assembly head for press-fitting (inserting) a press-fit (insertion) component into a hole is increased, the impact force when the press-fit component collides with the periphery of the hole increases to possibly damage the press-fit component or the peripheral part of the hole. Therefore, the impact force is required to be mitigated.

In general, when the impact force is mitigated, as described in Patent Document 1 (Japanese Unexamined Patent Application Publication No. 2004-338067) and Patent Document 2 (Japanese Unexamined Patent Application Publication No. 7-249896), it is often the case that a shock absorber or damper member which mitigates the impact force is provided.

### Prior Art Documents

### Patent Documents

Patent Document 1: Japanese Unexamined Patent Application Publication No. 2004-338067
Patent Document 2: Japanese Unexamined Patent Application Publication No. 7-249896

The document DE 199 54310 A1 discloses a drawing press comprising piezoelectric elements and an inductive sensor for feedback controlling the force of a holding down clamp by means of a control unit.

### Summary of Invention

### Problem to be Solved by the Invention

However, in the scheme of mitigating the impact force by the shock absorber or damper member as in Patent Documents 1 and 2 described above, there is a possibility that it takes time to some degrees or resonance occurs until the impact force is mitigated to be equal to or lower than an allowable value, thereby limiting an increase in driving speed.

Thus, the present inventors have studied a system which mitigate the impact force by using an actuator. However, since oscillation of the impact force is high-frequency oscillation, control processing cannot follow high-frequency oscillation. This poses problems such that the impact force cannot be responsively mitigated and, furthermore, the pressure force of the mobile body with respect to the pressure target is not stabilized due to the influence of the impact force.

Thus, a problem to be solved by the present invention is to provide a production machine capable of responsively mitigating an impact force when a mobile body collides with a pressure target and stabilizing the pressure force of the mobile body with respect to the pressure target.

### Means to Solve the Problem

This object is solved by the features of claim 1. A further improvement ins laid down in a sub-claim.

The present invention is directed to a production machine including a function of moving a mobile body by an actuator until the mobile body collides with a pressure target and controlling a pressure force of the mobile body with respect to the pressure target, the production machine configured to include: an impact-mitigating actuator for use in order to mitigate an impact force when the mobile body collides with the pressure target; impact-force detecting means which detects the impact force when the mobile body collides with the pressure target; low-frequency-band signal extracting means which extracts a low-frequency-band signal component from an output signal of the impact-force detecting means; driving-force feedback control means which controls a driving force of the actuator so that a difference between the low-frequency-band signal component extracted by the low-frequency-band signal extracting means and a pressure-force instruction is small; high-frequency-band signal extracting means which extracts a high-frequency-band signal component from the output signal of the impact-force detecting means; and impact-mitigating control means which controls a driving force of the impact-mitigating actuator based on the high-frequency-band signal component extracted by the high-frequency-band signal extracting means so that the impact force when the mobile body collides with the pressure target is mitigated.

According to this structure, the impact force when the mobile body collides with the pressure target is detected by the impact-force detecting means, extraction is made by the low-frequency-band signal extracting means from the output signal of the impact-force detecting means, and the driving force of the actuator is controlled by the driving-force feedback control means so that the difference between the extracted low-frequency-band signal component and the pressure-force instruction is small. That is, the magnitude of the impact force is extracted by extracting the low-frequency-band signal from the output signal of the impact-force detecting means, and feedback control is performed so that the driving force of an actuator 13 (the pressure force of the mobile body with respect to the pressure target) complies with the pressure-force instruction. Simultaneously, based on the high-frequency-band signal component extracted by the high-frequency-band signal extracting means from the output signal of the impact-force detecting means, the driving force of the impact-mitigating actuator is controlled so that the impact force is mitigated. With this, the impact force when the mobile body collides with the pressure target can be responsively mitigated, and the pressure force of the mobile body with respect to the pressure target can be stabilized.

In this case, the impact-mitigating actuator and the impact-force detecting means may be configured of one piezoelectric element. If the piezoelectric effect and the inverse piezoelectric effect of one piezoelectric element are used, the one piezoelectric element can be used as a self-sensing actuator to achieve both functions of the impact-mitigating actuator and the impact-force detecting means, and low cost and space saving can be advantageously achieved.

Alternatively, the impact-mitigating actuator and the impact-force detecting means may be configured of separate piezoelectric elements and provided in series in a direction of driving the mobile body, and at the instant when the piezoelectric element configuring the impact-force detecting means detects a distortion due to a collision with the pressure target, the drive voltage of the piezoelectric element configuring the impact-mitigating actuator may be controlled so that the piezoelectric element is deformed in a direction opposite to a direction of the distortion.

Still alternatively, the impact-mitigating actuator and the impact-force detecting means may be configured of separate piezoelectric elements, and a counter mass may be mounted on the piezoelectric element configuring the impact-mitigating actuator, and at the instant when the piezoelectric element configuring the impact-force detecting means detects a distortion due to a collision with the pressure target, the drive voltage of the piezoelectric element configuring the impact-mitigating actuator may be controlled so that the counter mass moves in a direction of mitigating the impact force.

As with the invention according to claim 1, the structure includes the low-frequency-band signal extracting means, the high-frequency signal extracting means, and the driving-force feedback control means.

Also, the structure may include position control means which performs position control of driving the actuator based on a position instruction and controlling a position of the mobile body, pressure-force control means which performs pressure-force control of controlling the actuator so that the pressure force of the mobile body with respect to the pressure target complies with a pressure-force instruction, collision detecting means which detects that the mobile body collides with the pressure target, and control-scheme switching means which causes position control to be performed by the position control means before a collision of the mobile body is detected by the collision detecting means, and causes pressure-force control to be performed by the driving-force control means after a collision of the mobile body is detected by the collision detecting means.

According to this structure, at the instant when the mobile body collides with the pressure target by position control, switching can be made from position control to pressure-force control. Therefore, while the driving speed of the mobile body is increased by position control, the impact force is effectively mitigated by pressure-force control after collision, and thereby the pressure force of the mobile body with respect to the pressure target can be stabilized.

### Brief Description of Drawings

FIG. 1 is a block diagram depicting the structure of a control system for a production machine of a first embodiment of the present invention.
FIG. 2 is a block diagram depicting the structure of a control system for a production machine of a second embodiment of the present invention.
FIG. 3 is a block diagram depicting the structure of a control system for a production machine of a third embodiment of the present invention.
FIG. 4 is a block diagram depicting the structure of a control system for a production machine of a forth embodiment which alone is not part of the invention.

### Modes for Carrying out the Invention

Several embodiments that embody modes for carrying out the present invention are described below.

### First Embodiment

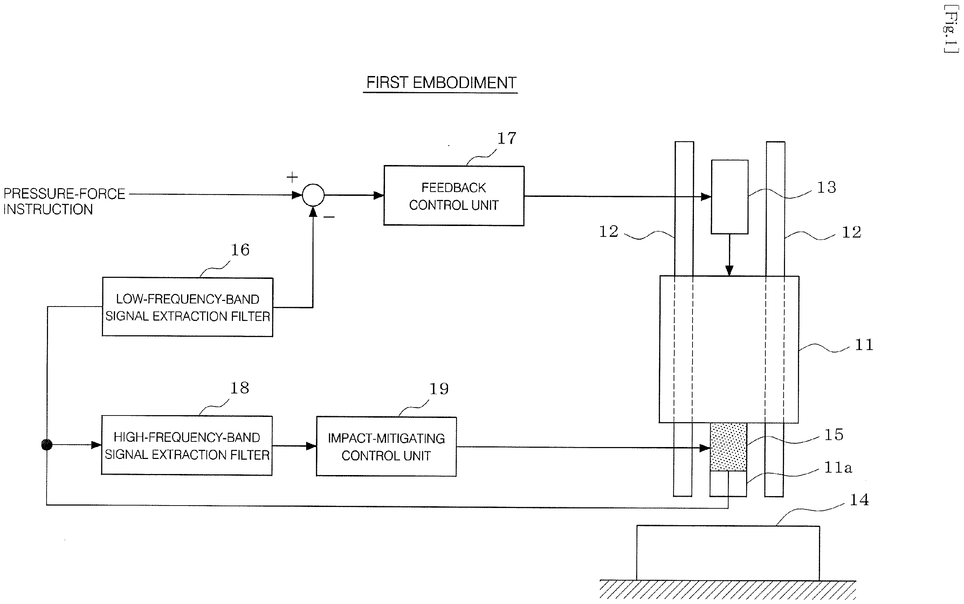

A first embodiment of the present invention is described based on FIG. 1.

A production machine of the first embodiment is, for example, a component mount machine, a component assembling machine, or the like. In the case of a component mount machine, when a component is absorbed to an absorption nozzle to be mounted on a circuit board, an operation of lightly pressuring and mounting the component onto the circuit board by the absorption nozzle is controlled by a control system of the first embodiment. In the case of a component assembling machine, an operation of holding and press-fitting (inserting) a press-fit (insertion) component into a hole is controlled by a control system of the first embodiment.

A mobile body 11 of the production machine is slidably supported on a shaft 12, and is driven by an actuator 13. The actuator 13 to drive the mobile body 11 is configured of a motor such as a servo motor or step motor, a linear motor, etc. At a predetermined position in a moving direction of the mobile body 11, a pressure target 14 is placed.

A piezoelectric element 15 is mounted on the mobile body 11 at a position where an impact force is exerted when its tip part 11a collides with the pressure target 14. This piezoelectric element 15 functions as an impact-mitigating actuator for use in order to mitigate the impact force when the tip part 11a of the mobile body 11 collides with the pressure target 14, and also functions as impact-force detecting means which detects an impact force when the tip part 11a of the mobile body 11 collides with the pressure target 14. That is, by using the piezoelectric effect and the inverse piezoelectric effect, the piezoelectric element 15 is used as a self-sensing actuator achieving both functions of an impact-mitigating actuator and impact-force detecting means.

A drive control system of the actuator 13 is provided with a low-frequency-band signal extraction filter 16 (low-frequency-band signal extracting means) and a feedback control unit 17 (driving-force feedback control means), the low-frequency-band signal extraction filter 16 extracting a low-frequency-band signal component from an output signal of the piezoelectric element 15 (an impact-force detection signal) when the tip part 11a of the mobile body 11 collides with the pressure target 14 and the feedback control unit 17 performing feedback control over the driving force of the actuator 13 (a pressure force of the mobile body 11 with respect to the pressure target 14) so that a difference between the low-frequency-band signal component extracted by this low-frequency-band signal extraction filter 16 and a pressure-force instruction is small. With the low-frequency-band signal component extracted by the low-frequency-band signal extraction filter 16 from the output signal of the piezoelectric element 15 (the impact-force detection signal), the magnitude of the impact force exerted on the tip part 11a of the mobile body 11 is extracted, and feedback control is performed by the feedback control unit 17 so that the driving force of the actuator 13 (the pressure force of the mobile body 11 with respect to the pressure target 14) complies with the pressure-force instruction.

On the other hand, a drive control system of the piezoelectric element 15 configuring an impact-mitigating actuator is provided with a high-frequency-band signal extraction filter 18 (high-frequency-band signal extracting means) and an impact-mitigating control unit 19 (impact-mitigating control means), the high-frequency-band signal extraction filter 18 extracting a high-frequency-band signal component from the output signal of the piezoelectric element 15 (an impact-force detection signal) when the tip part 11a of the mobile body 11 collides with the pressure target 14 and the impact-mitigating control unit 19 controlling a drive voltage of the piezoelectric element 15 (a driving force of the impact-mitigating actuator) based on the high-frequency-band signal component extracted by the high-frequency-band signal extraction filter 18 so that the impact force when the tip part 11a of the mobile body 11 collides with the pressure target 14 is mitigated.

The impact-mitigating control unit 19 generates a drive signal having a waveform with a phase opposite to that of the high-frequency-band signal component extracted by the high-frequency-band signal extraction filter 18 and changes the drive voltage of the piezoelectric element 15 with this drive signal, thereby changing the drive voltage of the piezoelectric element 15 so that the impact force exerted on the tip part 11a of the mobile body 11 is mitigated and mitigating the impact force exerted on the tip part 11a of the mobile body 11. This impact-mitigating control unit 19 may be configured of a digital circuit. However, if digital processing cannot sufficiently follow the oscillation frequency of the piezoelectric element 15 because the oscillation frequency is high, the impact-mitigating control unit 19 is preferably configured of an analog circuit.

In the first embodiment described above, with the low-frequency-band signal component extracted by the low-frequency-band signal extraction filter 16 from the output signal of the piezoelectric element 15 (the impact-force detection signal) when the tip part 11a of the mobile body 11 collides with the pressure target 14, the magnitude of the impact force exerted on the tip part 11a of the mobile body 11 is extracted, and feedback control is performed by the feedback control unit 17 so that the driving force of the actuator 13 (the pressure force of the mobile body 11 with respect to the pressure target 14) complies with the pressure-force instruction. Also, based on the high-frequency-band signal component extracted by the high-frequency-band signal extraction filter 18 from the output signal of the piezoelectric element 15 (the impact-force detection signal), the drive voltage of the piezoelectric element 15 (the driving force of the impact-mitigating actuator) is controlled by the impact-mitigating control unit 19 so that the impact force when the tip part 11a of the mobile body 11 collides with the pressure target 14 is mitigated. Therefore, the impact force when the tip part 11a of the mobile body 11 collides with the pressure target 14 can be responsively mitigated, and the pressure force of the mobile body 11 with respect to the pressure target 14 can be stabilized.

Furthermore, in the first embodiment, both functions of the impact-mitigating actuator and the impact-force detecting means are achieved by one piezoelectric element 15. Therefore, the first embodiment has an advantage that low cost and space saving can be achieved.

### Second Embodiment

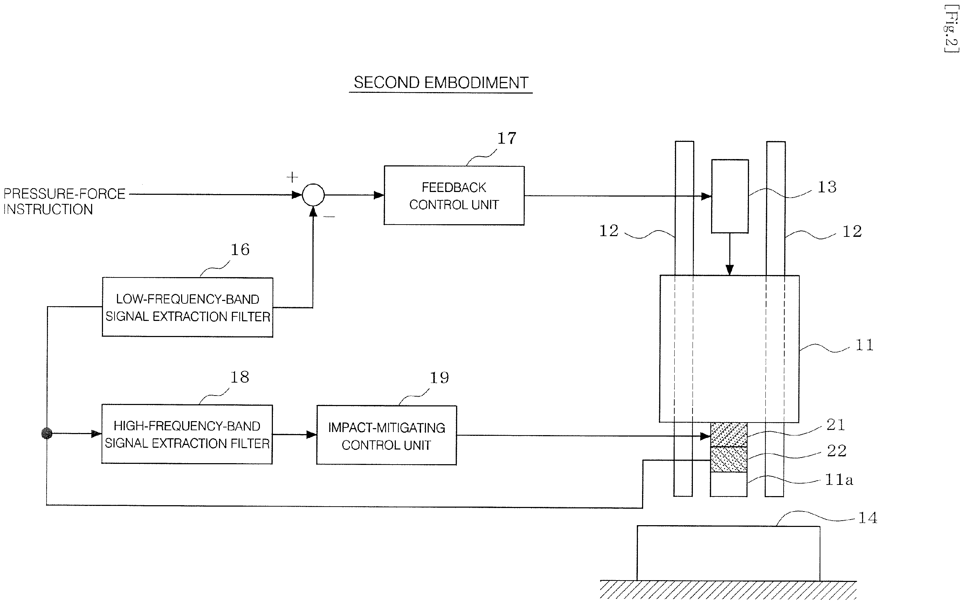

In the first embodiment described above, the structure is such that both functions of the impact-mitigating actuator and the impact-force detecting means are achieved by one piezoelectric element 15. In a second embodiment of the present invention depicted in FIG. 2, the tip part 11a of the mobile body 11 is provided with a piezoelectric element 21 and a piezoelectric element 22 in series in a direction of driving the mobile body 11, the piezoelectric element 21 for impact mitigation configuring an impact-mitigating actuator for use in order to mitigate an impact force when colliding with the pressure target 14 and the piezoelectric element 22 for impact-force detection configuring impact-force detecting means which detects an impact force when colliding with the pressure target 14. At the instant when the piezoelectric element 22 for impact-force detection detects a distortion due to a collision with the pressure target 14, the drive voltage of the piezoelectric element 21 is controlled so that the piezoelectric element 21 for impact mitigation is deformed in a direction opposite to a distortion direction.

To achieve this, a drive control system of the piezoelectric element 21 for impact mitigation is preferably configured of the high-frequency-band signal extraction filter 18 (high-frequency-band signal extracting means) and the impact-mitigating control unit 19 (impact-mitigating control means), the high-frequency-band signal extraction filter 18 extracting a high-frequency-band signal component from an output signal of the piezoelectric element 22 for impact-force detection (an impact-force detection signal) when the tip part 11a of the mobile body 11 collides with the pressure target 14 and the impact-mitigating control unit 19 controlling a drive voltage of the piezoelectric element 21 for impact mitigation based on the high-frequency-band signal component extracted by this high-frequency-band signal extraction filter 18 so that the impact force when the tip part 11a of the mobile body 11 collides with the pressure target 14 is mitigated. Other points are similar to those in the first embodiment described above, and identical portions are provided with the same reference characters and their description is omitted.

### Third Embodiment

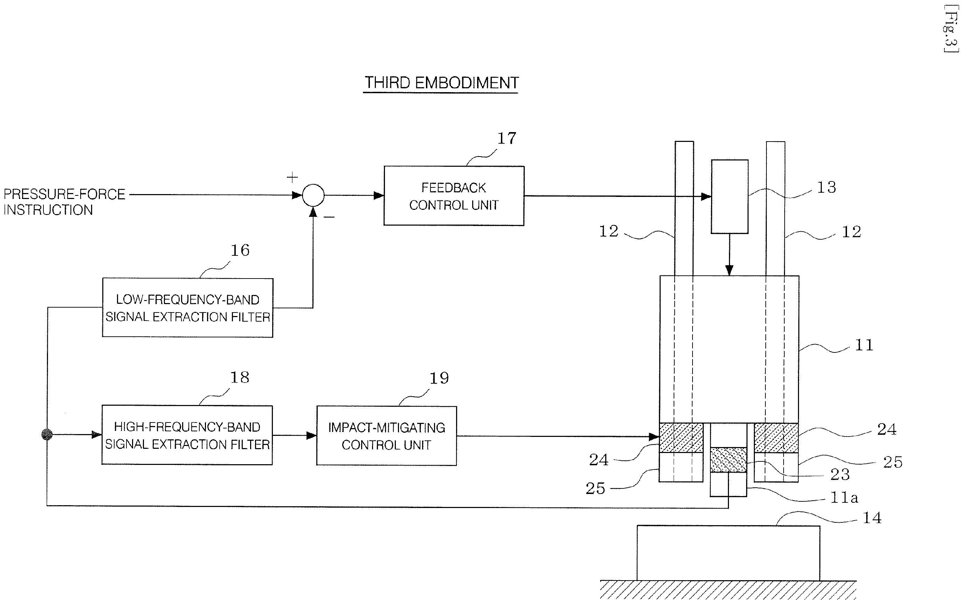

In a third embodiment of the present invention depicted in FIG. 3, the tip part 11a of the mobile body 11 is provided only with the piezoelectric element 23 for impact-force detection configuring impact-force detecting means which detects an impact force when colliding with the pressure target 14. A piezoelectric element 24 for impact mitigation configuring an impact-mitigating actuator for use in order to mitigate the impact force when the tip part 11a of the mobile body 11 collides with the pressure target 14 is mounted on the mobile body 11 so as to be positioned around the tip part 11a of the mobile body 11, and a counter mass 25 is mounted on this piezoelectric element 24 for impact mitigation. The piezoelectric element 24 for impact mitigation and the counter mass 25 may be each formed in a ring shape, or a plurality of these may be provided. In short, any provision is possible so that the load of the counter mass 25 equally acts on the mobile body 11 with respect to the center line of the mobile body 11.

In the third embodiment, at the instant when the piezoelectric element 23 for impact-force detection detects a distortion due to a collision with the pressure target 14, the drive voltage of the piezoelectric element 24 for impact mitigation is controlled so that the counter mass 25 is moved in a direction of mitigating the impact force.

To achieve this, the drive control system of the piezoelectric element 23 for impact mitigation is preferably configured of the high-frequency-band signal extraction filter 18 (high-frequency-band signal extracting means) and the impact-mitigating control unit 19 (impact-mitigating control means), the high-frequency-band signal extraction filter 18 extracting a high-frequency-band signal component from the output signal of the piezoelectric element 23 for impact-force detection (an impact-force detection signal) when the tip part 11a of the mobile body 11 collides with the pressure target 14 and the impact-mitigating control unit 19 controlling a drive voltage of the piezoelectric element 24 for impact mitigation based on this high-frequency-band signal component extracted by the high-frequency-band signal extraction filter 18 so that the impact force when the tip part 11a of the mobile body 11 collides with the pressure target 14 is mitigated. Other points are similar to those in the first embodiment described above, and identical portions are provided with the same reference characters and their description is omitted.

### Fourth Embodiment (which alone is not part of the invention)

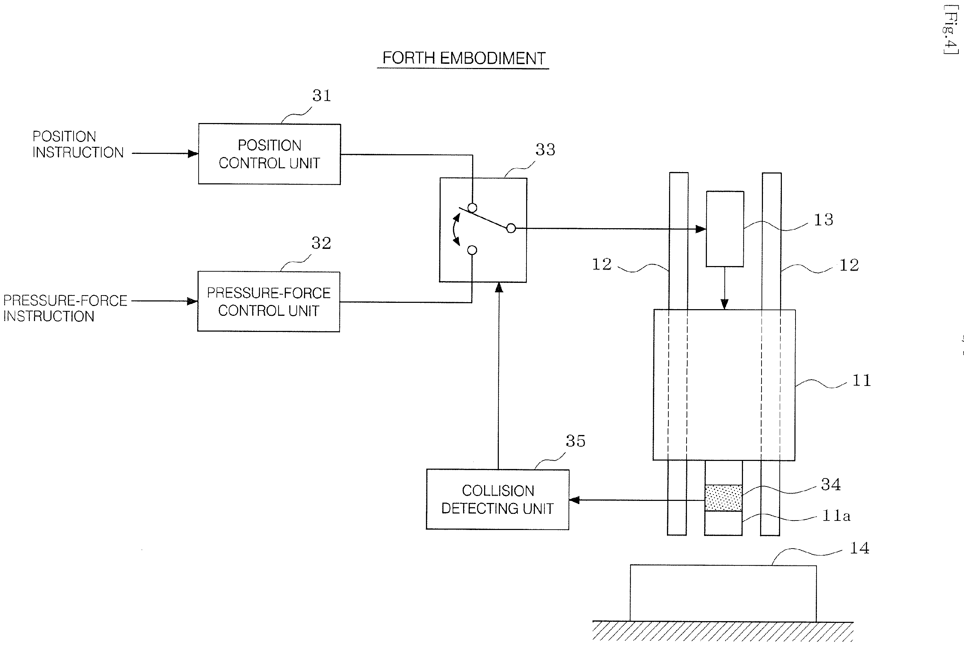

In a fourth embodiment depicted in FIG. 4, the drive control system of the actuator 13 which drives the mobile body 11 is provided with a position control unit 31 (position control means) which performs position control in which the actuator 13 is driven based on a position instruction to control the position of the mobile body 11, a pressure-force control unit 32 (pressure-force control means) which performs pressure-force control in which the actuator 13 is controlled so that the pressure force of the mobile body 11 with respect to the pressure target 14 complies with a pressure-force instruction, and a control-scheme switching unit 33 (control-scheme switching means) which switches a control scheme of the actuator 13 between position control by the position control unit 31 and pressure-force control by the pressure-force control unit 32.

The mobile body 11 is provided with a piezoelectric element 34 for collision detection configuring a collision detecting means which detects that the tip part 11a collides with the pressure target 14, and an output signal of this piezoelectric element 34 is inputted to a collision detecting unit 35. At the instant when the tip part 11a of the mobile body 11 collides with the pressure target 14 to change the output signal of the piezoelectric element 34, a collision detection signal is outputted from the collision detecting unit 35 to the control-scheme switching unit 33. Before a collision detection signal is outputted from the collision detecting unit 35 (before a collision is detected), the control-scheme switching unit 33 is switched to and kept in the state in which a position control signal of the position control unit 31 is outputted to the actuator 13, and the actuator 13 is driven so that the position of the mobile body 11 complies with the position instruction. At the instant when a collision detection signal is outputted from the collision detecting unit 35 (at the instant when a collision is detected), the state is switched to the state in which the control-scheme switching unit 33 outputs a pressure-force control signal of the pressure-force control unit 32 to the actuator 13, and the actuator 13 is driven so that the pressure force of the mobile body 11 with respect to the pressure target 14 complies with the pressure-force instruction.

According to the fourth embodiment described above, at the instant when the tip part 11a of the mobile body 11 collides with the pressure target 14 by position control, switching can be made from position control to pressure-force control. Therefore, while the driving speed of the mobile body 11 is increased by position control, the impact force is effectively mitigated by pressure-force control after collision, and thereby the pressure force of the mobile body 11 with respect to the pressure target 14 can be stabilized.

Note that the fourth embodiment described above may be implemented in combination with any of the first to third embodiments described above.

In addition, it is needless to say that the present invention can be implemented with various changes within a range not deviating from the scope of the present invention as defined by the claims. For example, the present invention may be implemented by changing the structure of the mobile body 11 and the like as appropriate.

### Description of the Reference Characters

11 mobile body
13 actuator
14 pressure target
15 piezoelectric element (impact-mitigating actuator, impact-force detecting means)
16 low-frequency-band signal extraction filter (low-frequency-band signal extracting means)
17 feedback control unit (driving-force feedback control means)
18 high-frequency-band signal extraction filter (high-frequency-band signal extracting means)
19 impact-mitigating control unit (impact-mitigating control means)
21 piezoelectric element for impact mitigation (impact-mitigating actuator)
22 piezoelectric element for impact-force detection (impact-force detecting means)
23 piezoelectric element for impact-force detection (impact-force detecting means)
24 piezoelectric element for impact mitigation (impact-mitigating actuator)
25 counter mass
31 position control unit (position control means)
32 pressure-force control unit (pressure-force control means)
33 control-scheme switching unit (control-scheme switching means)
34 piezoelectric element for collision detection (collision detecting means)
35 collision detecting unit

## Claims

1. A production machine including a function of moving a mobile body (11) by a main actuator (13) until the mobile body (11) collides with a pressure target (14) and controlling a pressure force of the mobile body (11) with respect to the pressure target (14), the production machine comprising:
an impact-mitigating actuator (15; 21; 24) for use in order to mitigate an impact force when the mobile body (11) collides with the pressure target (14);
**characterised by**
impact-force detecting means (15; 22; 23) which detects the impact force when the mobile body (11) collides with the pressure target;
low-frequency-band signal extracting means (16) which extracts a low-frequency-band signal component from an output signal of the impact-force detecting means (15, 22, 23);
driving-force feedback control means (17) which controls a driving force of the main actuator (13) so that a difference between the low-frequency-band signal component extracted by the low-frequency signal extracting means (16) and a pressure-force instruction is small;
high-frequency-band signal extracting means (18) which extracts a high-frequency-band signal component from the output signal of the impact-force detecting means (15; 22; 23); and
impact-mitigating control means (19) which controls a driving force of the impact-mitigating actuator (15; 21; 24) based on the high-frequency-band signal component extracted by the high-frequency signal extracting means (18) so that the impact force when the mobile body (11) collides with the pressure target (14) is mitigated.

2. The production machine according to claim 1, wherein
the impact-mitigating actuator and the impact-force detecting means are configured of one piezoelectric element (15).

## Patentansprüche

1. Produktionsmaschine, die eine Funktion zum Bewegen eines beweglichen Körpers (11) mittels eines Haupt-Betätigungselementes (13) bis zum Kollidieren des beweglichen Körpers (11) mit einem Druck-Objekt (14) sowie zum Steuern einer Druckkraft des beweglichen Körpers (11) in Bezug auf das Druck-Objekt (14) einschließt, wobei die Produktionsmaschine umfasst:
ein Betätigungselement (15; 21; 24) zum Abschwächen eines Aufschlags, das eingesetzt wird, um eine Aufschlagkraft beim Kollidieren des beweglichen Körpers (11) mit dem Druck-Objekt (14) abzuschwächen;
**gekennzeichnet durch**
eine Aufschlagkraft-Erfassungseinrichtung (15; 22; 23), die die Aufschlagkraft beim Kollidieren des beweglichen Körpers (11) mit dem Druck-Objekt (14) erfasst;
eine Einrichtung (16) zum Extrahieren eines Niederfrequenzband-Signals, die eine Niederfrequenzband-Signalkomponente aus einem Ausgangssignal der Aufschlagkraft-Erfassungseinrichtung (15, 22, 23) extrahiert;
eine Antriebskraft-Regelungseinrichtung (17), die eine Antriebskraft des Haupt-Betätigungselementes (13) so regelt, dass eine Differenz zwischen der durch die Einrichtung (16) zum Extrahieren eines Niederfrequenz-Signals extrahierten Niederfrequenzband-Signalkomponente und einem Druckkraft-Befehl gering ist;
eine Einrichtung (18) zum Extrahieren eines Hochfrequenzband-Signals, die eine Hochfrequenzband-Signalkomponente aus dem Ausgangssignal der Aufschlagkraft-Erfassungseinrichtung (15; 22; 23) extrahiert; sowie
eine Aufschlagkraft-Steuerungseinrichtung (19), die eine Antriebskraft des Betätigungselementes (15; 21; 24) zum Abschwächen eines Aufschlags auf Basis der durch die Einrichtung (18) zum Extrahieren eines Hochfrequenz-Signals extrahierten Hochfrequenzband-Signalkomponente so steuert, dass die Aufschlagkraft beim Kollidieren des beweglichen Körpers (11) mit dem Druck-Objekt (14) abgeschwächt wird.

2. Produktionsmaschine nach Anspruch 1, wobei
das Betätigungselement zum Abschwächen eines Aufschlags und die Aufschlagkraft-Erfassungseinrichtung als ein piezoelektrisches Element (15) ausgeführt sind.

## Revendications

1. Machine de production comprenant une fonction de déplacement d'un corps mobile (11) par un actionneur principal (13) jusqu'à ce que le corps mobile (11) entre en collision avec une cible de compression (14), et de contrôle d'une force de compression du corps mobile (11) par rapport à la cible de compression (14), la machine de production comprenant :
un actionneur de mitigation d'impact (15 ; 21 ; 24) destiné à être utilisé pour mitiger une force d'impact lorsque le corps mobile (11) entre en collision avec la cible de compression (14) ;
**caractérisée par**
un moyen de détection de force d'impact (15 ; 22 ; 23) qui détecte la force d'impact quand le corps mobile (11) entre en collision avec la cible de compression ;
un moyen d'extraction de signal en bande basse fréquence (16) qui extrait une composante de signal en bande basse fréquence dans un signal de sortie du moyen de détection de force d'impact (15, 22, 23) ;
un moyen de contrôle de rétroaction de force d'entraînement (17) qui contrôle une force d'entraînement de l'actionneur principal (13) de telle sorte qu'une différence entre la composante de signal en bande basse fréquence extraite par le moyen d'extraction de signal basse fréquence (16) et une instruction de force de compression soit faible ;
un moyen d'extraction de signal en bande haute fréquence (18) qui extrait une composante de signal en bande haute fréquence dans le signal de sortie du moyen de détection de force d'impact (15, 22, 23) ; et
un moyen de contrôle de mitigation d'impact (19) qui contrôle une force d'entraînement de l'actionneur de mitigation d'impact (15 ; 21 ; 24) sur base de la composante de signal en bande haute fréquence extraite par le moyen d'extraction de signal haute fréquence (18) de telle sorte que la force d'impact quand le corps mobile (11) entre en collision avec la cible de compression (14) soit mitigée.

2. Machine de production selon la revendication 1, dans laquelle
l'actionneur de mitigation d'impact et le moyen de détection de force d'impact sont configurés sous forme d'un élément piézoélectrique (15).
